# EUROPÄISCHE PATENTSCHRIFT

(11) **EP 1 068 751 B1**
(45) Veröffentlichungstag und Bekanntmachung des Hinweises auf die Patenterteilung: **12.06.2002**
(21) Anmeldenummer: 99920560.2
(22) Anmeldetag: 31.03.1999
(51) Int. Cl.: H04Q 7/24, H04B 7/26

(54) **VERFAHREN UND MOBILTEIL ZUM AUFBAUEN VON TELEKOMMUNIKATIONSVERBINDUNGEN IN TELEKOMMUNIKATIONSSYSTEMEN MIT DRAHTLOSER TELEKOMMUNIKATION, INSBESONDERE IN DECT/GAP-SYSTEMEN UND TELEKOMMUNIKATIOSSYSTEM MIT DRAHTLOSER TELEKOMMUNIKATION, INSBESONDERE DECT/GAP-SYSTEM**
METHOD AND MOBILE ELEMENT FOR SETTING UP TELECOMMUNICATION LINKS IN TELECOMMUNICATION SYSTEMS INVOLVING WIRELESS TELECOMMUNICATION, ESPECIALLY IN DECT-GAP SYSTEMS AND TELECOMMUNICATION SYSTEM INVOLVING WIRELESS TELECOMMUNICATION, ESPECIALLY A DECT/GAP SYSTEM
PROCEDE ET ELEMENT MOBILE DESTINES A L'ETABLISSEMENT DE LIAISONS DE TELECOMMUNICATION DANS DES SYSTEMES DE TELECOMMUNICATION RADIO, NOTAMMENT LES SYSTEMES DECT/GAP ET SYSTEME DE TELECOMMUNICATION RADIO, NOTAMMENT UN SYSTEME DECT/GAP

(30) Priorität: 02.04.1998 DE 19814898
(43) Veröffentlichungstag der Anmeldung: 17.01.2001
(73) Patentinhaber: SIEMENS AKTIENGESELLSCHAFT, 80333 München (DE)
(72) Erfinder: TERGLANE, Hermann-Josef, D-48619 Heek (DE)
(86) Internationale Anmeldenummer: DE9900972
(87) Internationale Veröffentlichungsnummer: WO9952309

(56) Entgegenhaltungen:
- EP-A- 0 689 303
- EP-A- 0 726 690
- EP-A- 0 788 255
- WO-A-95/32589

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, IS-95, PHS, PDC etc. **[**vgl. IEEE Communications Magazine, January 1995, Seiten 50 bis 57; D.D. Falconer et al: "Time Division Multiple Access Methods for Wireless Personal Communications"**]** und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von.dieser allgemeinen Definition eines Nachrichtensystems bezieht sich die Erfindung
(1) auf ein Verfahren zum Aufbauen von Telekommunikationsverbindungen in Telekommunikationssystemen mit drahtloser Telekommunikation, insbesondere in DECT/GAP-Systemen gemäß dem Oberbegriff des Patentanspruches 1,
(2) auf ein Mobilteil zum Aufbauen von Telekommunikationsverbindungen in Telekommunikationssystemen mit drahtloser Telekommunikation, insbesondere in DECT/GAP-Systemen gemäß dem Oberbegriff des Patentanspruches 6 und
(3) auf ein Telekommunikationssystem mit drahtloser Telekommunikation, insbesondere DECT/GAP-System gemäß dem Oberbegriff des Patentanspruches 11.

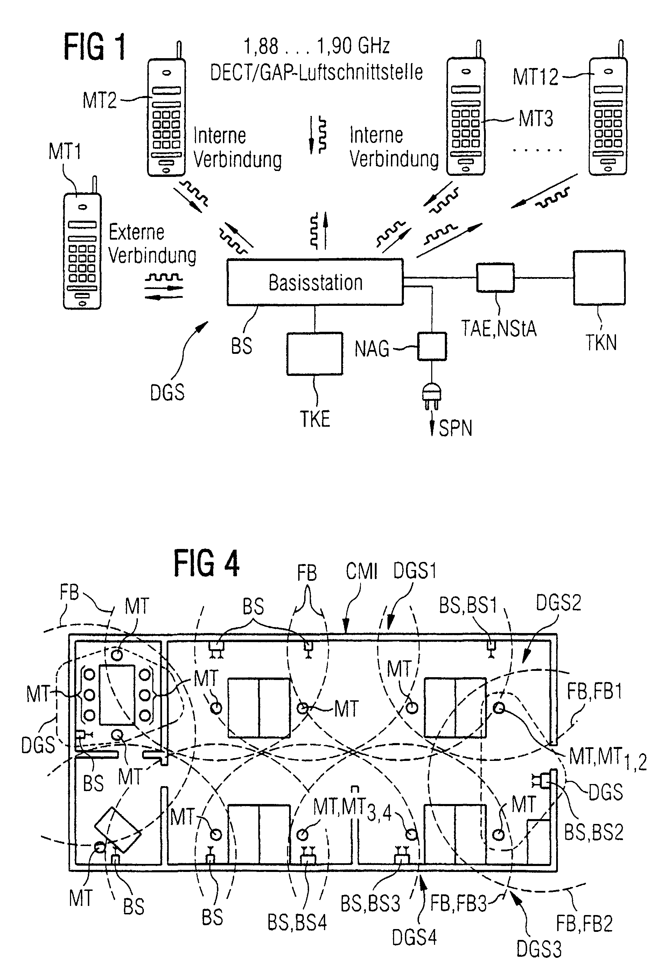

Telekommunikationssysteme der vorstehend definierten Art sind beispielsweise DECT-Systeme **[D**igital **E**nhanced (früher: European) **C**ordless **T**elecommunication; *vgl.* ***(1):*** *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Okt. 1992;* ***(2):*** *Telcom Report 16 (1993), Nr. 1, J. H. Koch: "Digitaler Komfort für schnurlose Telekommunikation - DECT-Standard eröffnet neue Nutzungsgebiete", Seiten 26 und 27;* ***(3):*** *tec 2*/*93 - Das technische Magazin von Ascom "Wege zur universellen mobilen Telekommunikation", Seiten 35 bis 42*; ***(4):*** *Philips Telecommunication Review, Vol. 49, No. 3, Sept. 1991, R.J. Mulder:" DECT, a universal cordless access System";* ***(5):*** *WO 93*/*21719 (FIG 1 bis 3 mit dazugehöriger Beschreibung)*] oder GAP-Systeme (**G**eneric **A**ccess **P**rofile; *vgl. ETSI-Publikation ETS 300444, December 1995, ETSI, FR),* die zur Übertragung von Sprach- und/oder Paketdaten beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS eines DECT/GAP-Systems DGS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision Duplex) parallel zu DECT/GAP-Mobilteilen MT1...MT12 aufgebaut werden. Die Zahl 12 ergibt sich aus einer Anzahl "k" von für den Duplexbetrieb des DECT/GAP-Systems DGS zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl, telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekoimnunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen. Die in Figur 1 dargestellte Konfiguration wird als das "Standard-DECT-Szenario" bezeichnet.

Alternativ zu dem vorstehend beschriebenen "Standard-DECT-Szenario" ist gemäß der WO97/42717 (vgl. Patentanspruch 4) auch ein "Walkie-Talkie"-Betrieb möglich, bei dem die Basisstation (Vermittlungseinrichtung) und ein Mobilteil eine Einheit bilden. Dieses Mobilteil übernimmt dann die Funktionalität einer Basisstation und ist somit eine Quasi-Basisstation. Die anderen Mobilteile können sich auf diese Quasi-Basisstation aufsynchronisieren und Internverbindungen aufbauen. Bei diesem "Walkie-Talkie"-Betrieb ist gewöhnlich keine Basisstation in Funkreichweite zu den "Walkie-Talkie"-Mobilteilen.

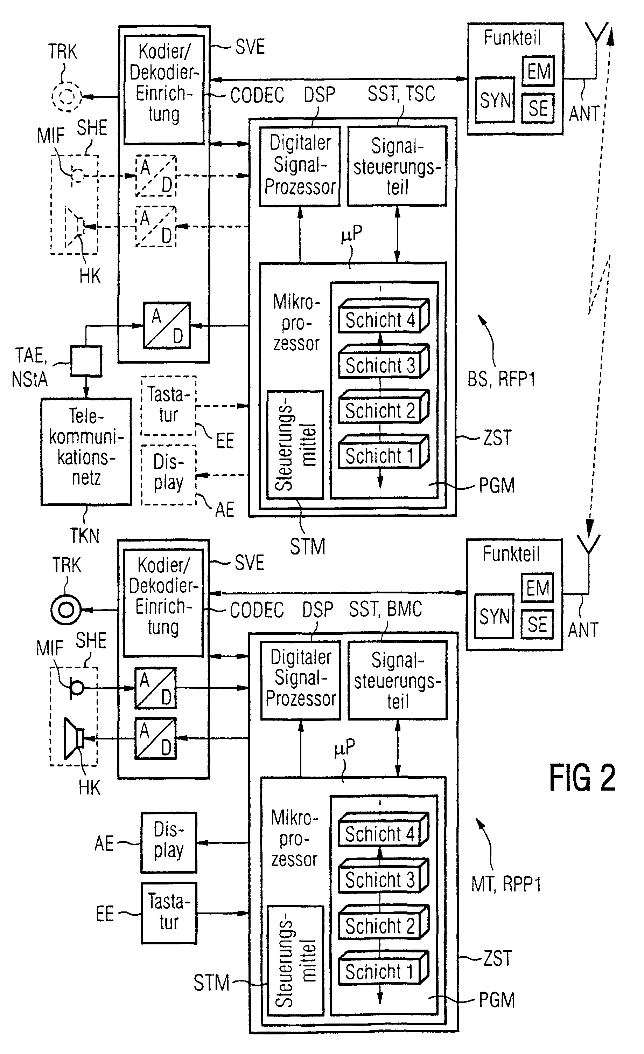

FIGUR 2 zeigt ausgehend von der Druckschrift *Components 31 (1993), Heft 6, Seiten 215 bis 218; S. Althammer, D. Brückmann: "Hochoptimierte IC's für DECT-Schnurlostelefone"* den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell **[***vgl.* ***(1):*** *Unterrichtsblätter - Deutsche Telekom, Jg. 48, 2*/*1995, Seiten 102 bis 111;* ***(2):*** *ETSI-Publikation ETS 300175-1...9, Oktober 1992***]** aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift *Components 31 (1993), Heft 6, Seiten 215 bis 218* beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und die Telekommunikationsanschlußeinheit TAE bzw. die Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

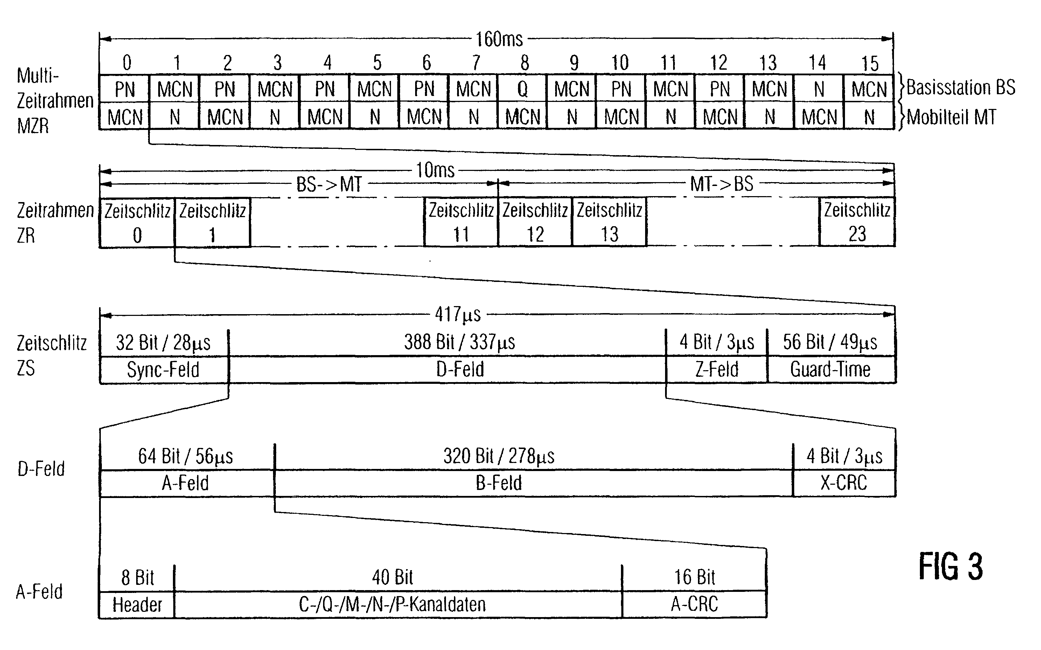

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (**T**ime **D**ivision **D**uplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

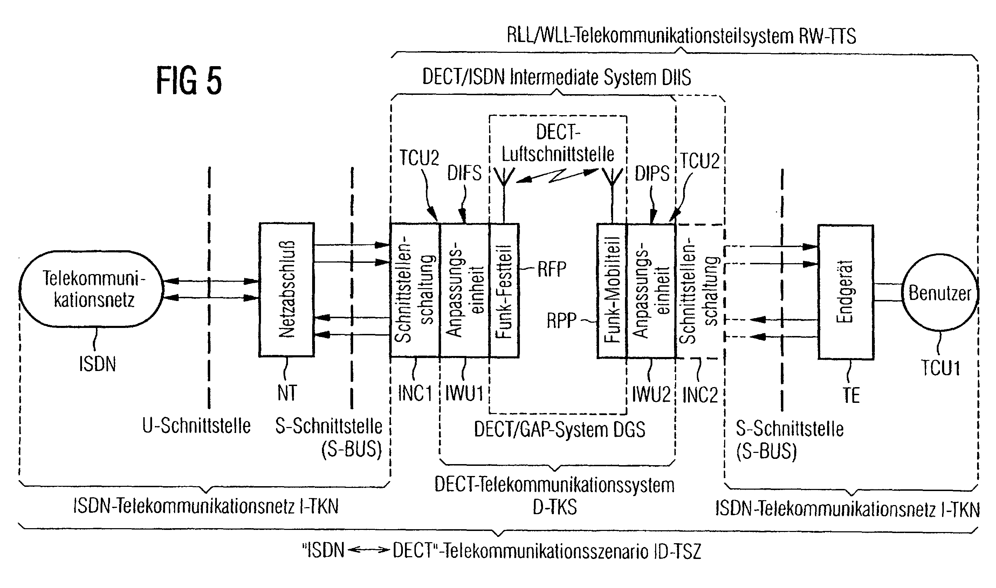

FIGUR 4 zeigt ausgehend von dem DECT/GAP-System DGS nach FIGUR 1 ein zellulares DECT/GAP-Multisystem CMI (Cordless Multicell Integration), bei dem mehrere der vorstehend beschriebenen DECT/GAP-Systeme DGS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme DGS ist dabei so ausgeprägt (lückenlose Funkabdeckung des geographischen Ortes), daß einzelne DECT/GAP-Systeme DGS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines vorzugsweise als ersten DECT/GAP-Systems DGS1 in einem ersten Funkbereich FB1 und eine zweite Basisstation BS2 eines zweiten DECT/GAP-Systems DGS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten DECT/GAP-Systems DGS3 und eine vierte Basisstation BS4 eines vierten DECT/GAP-Systems DGS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 4 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 4) verbindbar sind, kann nun gemäß der Publikation *"Vortrag von A. Elberse, M. Barry, G. Fleming zum Thema: "DECT Data Services - DECT in Fixed and Mobile Networks", 17.*/*18. Juni 1996, Hotel Sofitel, Paris; Seiten 1 bis 12 und Zusammenfassung"* dahingehend erweitert werden, daß die DECT-Mobilteile über die DECT-Luftschnittstelle mit privaten und öffentlichen DECT-Basisstationen verbindbar sind und dabei Sprach- und/oder Paketdaten übertragbar sind.

Dieses Szenario kann nun gemäß der WO95/05040 (vgl. Figuren 3 bis 8 mit der jeweils dazugehörigen Beschreibung) im Hinblick auf ein **"U**niverselles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(****C****ordless* ***T****erminal* ***M****obility; vgl. ETSI-Publikationen* ***(1):*** *"IN Architecture and Functionality for the support of CTM", Draft Version* *1.10, September 1995;* ***(2):*** *"Cordless Terminal Mobility (CTM) - Phase 1, Service Description", Draft DE*/*NA-010039, Version 6, 2.Oktober 1995)* in eine übergeordnete Netzinfrastruktur (z.B. ISDN-, PSTN-, GSM- und/oder Satelliten-Netze) für Zugriffe *(vgl. ETSI-Publikation* ***"C****TM* ***A****ccess **P**rofile (CAP)" prETS 300824, November 1996)* einzubinden. Dies kann - gemäß dem Patentanspruch 1 der WO 95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von A. Elberse, M. Barry, G. Fleming zum Thema: "DECT Data Services - DECT in Fixed and Mobile Networks", 17.*/*18. Juni 1996, Hotel Sofitel, Paris; Selten 1 bis 12 und Zusammenfassung)* und nicht als Netz verstanden.

Stellvertretend für das vorstehend vorgestellte Szenario zeigt FIGUR 5 -ausgehend von den Druckschriften "*Nachrichtentechnik Elektronik, Berlin 45, (1995), Heft 1, Seiten 21 bis 23 und Heft 3, Seiten 29 und 30" sowie IEE Colloquium 1993, 173; (1993), Seiten 29*/*1* - *29*/*7; W.Hing, F.Halsall: "Cordless access to the ISDN basic rate service"* auf der Basis eines **D**ECT/**I**SDN **I**ntermediate **S**ystems DIIS gemäß *der ETSI-Publikation prETS 300822, Februar 1997 -* ein "**I**SDN ↔ **D**ECT"-**T**elekommunikations**sz**enario ID-TSZ (**I**ntegrated **S**ervices **D**igital **N**etwork ↔ **D**igital **E**nhanced **C**ordless **T**elecommunication) mit einem **I**SDN-**T**elekommuni**k**ations**n**etz I-TKN **[***vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102; T6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft 3, Seiten 129 bis 135;* ***T****10: (1993) Heft 4, Seiten 187 bis 190;"*] und einem mit dem ISDN-Telekommunikationsnetz I-TKN verbundenen DECT-Telekommunikationssystem D-TKS.

Das DECT-Telekoamunikationssystem D-TKS kann dabei - wie im weiteren näher ausgeführt werden wird - Bestandteil eines DECT/ISDN Intermediate Sysems DIIS bzw. eines RLL/WLL-Telekommunikationsteilsystems RW-TTS sein. Das DECT-Telekommunikationssystem D-TKS und somit das DECT/ISDN Intermediate System DIIS bzw. das RLL/WLL-Telekommunikationsteilsystem RW-TTS basieren vorzugsweise auf einem **D**ECT/**G**AP-**S**ystem DGS, wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder Global **S**ystem for **M**obile Communication; vgl. Informatik Spektrum 14 (1991) Juni, Nr. 3, Berlin, DE; A.Mann: 'Der GSM-Standard - Grundlage für digitale europäische Mobilfunknetze", Seiten 137 bis 152). Stattdessen ist es im Rahmen eines UMTS-Szenarios auch möglich, daß das ISDN-Telekommunikationsnetz I-TKN als GSM-Netz oder als PSTN-Netz (**P**ublic **S**witched **T**elecommunications **N**etwork) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsnetzes I-TKN die eingangs erwähnten Systeme/Netze sowie zukünftige Systeme/Netze in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Teiekommunikationssystemen, wie dem ISDN, (z.B. RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT"-Telekommunikationsszenario ID-TSZ nach FIGUR 4 ist zum einen ein erster Telekommunikationsteilnehmer (Benutzer) TCU1 (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECTspezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsnetzes I-TKN und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface Circuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und gegebenenfalls eine Schnittstellenschaltung INC2 (**IN**terface Circuitry) zur S-Schnittstelle. Das Funk-Festteil RFP und das Funk-Mobilteil RPP bilden dabei das bekannte DECT/GAP-System DGS.

Die FIGUR 5 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystem RW-TTS in das ISDN-Telekommunikationsnetz I-TKN als lokale Nachrichtenübertragungsschleife eingebunden ist und zum anderen (2. Möglichkeit) wie das DECT/ISDN Intermediate System DIIS unter CAP-Gesichtspunkten (**C**ordless Terminal Mobility **A**ccess **P**rofile) nur netzseitig mit dem ISDN-Telekommunikationsnetz I-TKN verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

Für den Aufbau von Telekommunikationsverbindungen zwischen der/den Basisstation/en BS und den Mobilteilen MT in den DECT-Systemen gemäß den FIGUREN 1 bis 5 ist nach dem DECT-Standard beispielsweise die nachfolgend beschriebene Prozedur vorgesehen.

Bei einer "On-air Subskription", d.h. das Anmelden eines DECT-Mobilteils oder sonstiger DECT-Terminals an eine entsprechende DECT-Basisstation über die "Luft" werden vorher Mobilteil und Basisstation in einen anmeldebereiten Zustand gebracht (vgl. ETSI-Publikation ETS 300175-3, Oktober 1992, Kap. 4.3).

Wird die Basisstation durch eine Bedienerprozedur in den anmeldebereiten Zustand gebracht, so "broadcastet" sie dies durch Setzen des "Higher Layer Capability'-Bit "a44" **[**vgl. ETSI-Publikation ETS 300 175-5, Oktober 1992 Annex F**]**.

Dies geschieht dadurch, daß die Basisstation BS (**R**adio **F**ixed **P**art RFP) gemäß den FIGUREN 1 bis 5 über die DECT-Luftschnittstelle in regelmäßigen Zeitabständen auf Simplexübertragungswegen, den sogenannten Dummy-Bearer, Broadcast-Informationen sendet, die von dem Mobilteil MT (**R**adio **P**ortable **P**art RPP) gemäß den FIGUREN 1 bis 5 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstation bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil MT, RPP, das eine Telekommunikationsverbindung zu der Basisstation BS, RFP haben möchte, die Broadcast-Informationen - wie beim Übertragen der Broadcast-Informationen auf dem Dummy-Übertragungsweg - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

Das Mobilteil MT, RPP scannt nach Basisstationen BS, RFP, welche dieses Bit "a44" gesetzt haben und baut nach erfolgreicher Suche bzw. nach erfolgreichem Scan-Vorgang eine Funkverbindung zu dieser Basisstation BS, RFP auf.

Der eigentliche ('klassische') Verbindungsaufbau (call establishment) erfolgt nach den Regeln der Kanalselektion (vgl. ETSI-Publikation ETS 300175-5, Oktober 1992, Kapitel 9 und insbesondere Kapitel 9.3), wonach ein neuer Kanal für den Aufbau einer neuen Verbindung selektiert und eine Verbindungsanforderung (CC-SETUP) zur Basisstation BS, RFP abgesetzt wird.

Aus der EP-0 497 490 A2 ist ein Telekommunikationssystem zur drahtlosen Telekommunikation bekannt, das zum Zweck der drahtlosen Telekommunikation eine Schnurlos-Vermittlungsanlage, mehrere Festteile und mehrere Mobilteile enthält und bei dem zur Erhöhung der Funkreichweite die Festteile als Repeater ausgebildet sind. Die Ausbildung der Mobilteile als Repeater ist nicht vorgesehen.

Aus der EP-0 689 303 A1 ist ein TDMA-Kommunikationssystem mit einer Basisstation und einer Vielzahl von Mobilstationen bekannt, bei dem die Basisstation in einem vorgegebenen Zeitschlitz von aufeinanderfolgenden Zeitrahmen des TDMA-Protokolls Daten auf einem ersten Kanal mit einer ersten Trägerfrequenz an eine der Mobilstationen überträgt. Damit die Mobilstationen untereinander ohne Unterstützung der Basisstation Daten austauschen können, werden diese Daten in einem weiteren vorgegebenen Zeitschlitz von aufeinanderfolgenden Zeitrahmen des TDMA-Protokolls auf einem zweiten Kanal mit einer zweiten Trägerfrequenz übertragen.

Aus der WO 95/32589 ist ein Verfahren zum Aufbauen von Telekommunikationsverbindungen in Telekommunikationssystemen mit drahtloser Telekommunikation zwischen Festteilen und Mobilteilen bekannt, bei dem eine Repeater-Station den Verbindungsaufbau zwischen zwei Mobilstationen bzw. zwischen der Basisstation und einer Mobilstation derart steuert, daß insbesondere eine Abbildung von Direktverbindungskanälen auf Systemkanäle erfolgt, wobei ein Direktverbindungskanal ein Kanal ist, welcher von den genutzten Kanälen des Telekommunikationssystems separiert ist.

Die der Erfindung zugrundeliegende Aufgabe besteht darin, Telekommunikationsverbindungen in drahtlosen Telekommunikationssystemen, insbesondere in DECT/GAP-Systemen, bei optimaler Ausnutzung der in den Telekommunikationssystemen jeweils zur Verfügung stehenden Luftschnittstellenressourcen auch über die systemspezifische Funkreichweite hinaus herzustellen.

Diese Aufgabe wird erstens ausgehend von dem in dem Oberbegriff des Patentanspruches 1 definierten Verfahren durch die in dem Kennzeichen des Patentanspruches 1 angegebenen Merkmale, zweitens ausgehend von dem in dem Oberbegriff des Patentanspruches 6 definierten Mobilteil durch die in dem Kennzeichen des Patentanspruches 6 angegebenen Merkmale und drittens ausgehend von dem in dem Oberbegriff des Patentanspruches 11 definierten Telekoinmunikationssystem. durch die in dem Kennzeichen des Patentanspruches 11 angegebenen Merkmale gelöst.

Die der Erfindung zugrundeliegende Idee besteht darin, daß gemäß der Ansprüche 1, 6 und 11 in Telekommunikationssystemen durch drahtlose Telekommunikation mit Festteilen verbindbare, in einen Direktverbindungsmodus und/oder Repeater-Modus betreibbare erste Mobilteile, die synchron zu den Festteilen sind, in bezug auf zweite Mobilteile, die synchron und/oder asynchron zu den Festteilen sind, für eine vorgebbare Zeitdauer den Aufbau von INTERN-Telekommunikationsverbindungen zu den zweiten Mobilteilen steuern und durchführen können, Broadcast-Informationen an die zweiten Mobilteile übertragen können, als Repeater den Aufbau von INTERN-Telekommunikationsverbindungen zwischen den zweiten Mobilteilen steuern und durchführen können und/oder als Repeater EXTERN-Telekommunikationsverbindungen zwischen den Festteilen und den zweiten Mobilteilen steuern und durchführen können.

Dies wird dadurch erreicht, daß das Festteil für die vorgebbare Zeitdauer die Funktionalität zur Durchführung der vorstehend angegebenen Maßnahmen (z.B. die Kontroll- und Steuerungsfunktion) an das erste Mobilteil abtritt bzw. abgibt. Das erste Mobilteil wird dadurch zu einem Quasi-Festteil. Im Unterschied zu dem Walkie-Talkie-Szenario bleibt und ist das Mobilteil aber synchron zu dem Festteil bzw, der Basisstation.

Diese Vorgehensweise bietet insbesondere für TDMA-basierte Systeme folgende Vorteile:
- Pro Internverbindung werden nur noch zwei Zeitschlitze statt bisher vier Zeitschlitze belegt.
- Für Internverbindungen übernimmt das Festteil lediglich die Verwaltung der besetzten zweiten Mobilteile.
- Es können prinzipiell beliebig viele Internverbindungen gleichzeitig aktiv sein, solange dementsprechend viele freie Funkkanäle (physiklische Ressourcen) vorhanden sind.
- Die Kapazität des Festteils wird nur durch die möglichen Externverbindungen begrenzt.

Der vom ersten Mobilteil gesteuerte Aufbau der Telekommunikationsverbindungen und das vom ersten Mobilteil durchgeführte Übertragen der Broadcast-Informationen kann dabei gemäß Anspruch 3, 8 und 13 durch benutzerspezifische Bedienprozeduren an dem ersten Mobilteil oder gemäß Anspruch 4, 9 und 14 auf Anforderung vom Festteil eingeleitet werden. Dadurch ist ein flexibler universeller an die unterschiedlichen Telekommunikationssituationen angepaßter Einsatz, z.B. des Telekommunikationssystem bzw. des Mobilteils, sichergestellt.

Weitere vorteilhafte Weiterbildungen der Erfindung sind jeweils in den übrigen Unteransprüchen angegeben.

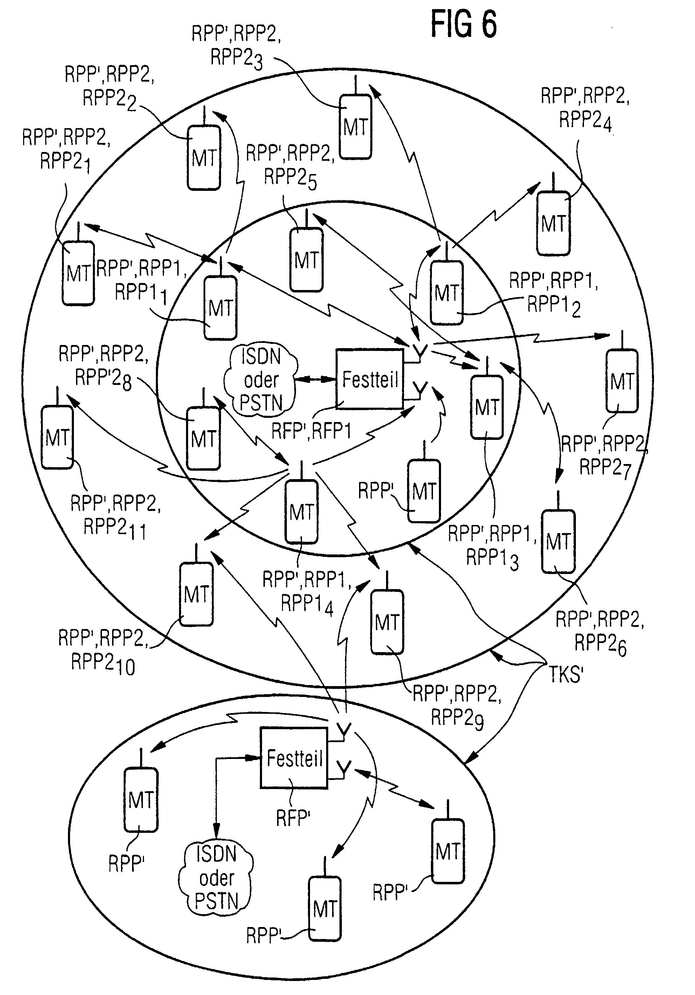

Ein Ausführungsbeispiel der Erfindung wird anhand der FIGUR 6 erläutert.

FIGUR 6 zeigt ausgehend von den FIGUREN 1 bis 5 ein z.B. als DECT/GAP-System ausgebildetes Telekommunikationssystem TKS' mit mindestens einem als Basisstation ausgebildeten Festteil (Radio Fixed Part) - im vorliegenden Fall z.B. zwei Festteilen RFP' und mehreren Mobilteilen (Radio Portable Part) RPP', die durch drahtlose Telekommunikation verbindbar sind. Von den beiden Festteilen RFP' ist ein Festteil als ein erstes Festteil RFP1 ausgebildet, das für eine vorgebbare Zeitdauer die Funktionalität zum Aufbauen von Telekommunikationsverbindungen an vorgegebene Mobilteile RPP' abtreten bzw. abgeben kann, die synchron zu dem ersten Festteil RFP1 sind. Dies sind die in einem ersten Funkraum FR1 angeordneten Mobilteile RPP', während die in einem zweiten Funkraum FR2 angeordneten Mobilteile RPP' asynchron zum ersten Festteil RFP1 sind.

An welche der im Funkraum FR1 angeordneten Mobilteile RPP' das erste Festteil RFP1 die Funktionalität abtritt bzw. abgibt, ist z.B. davon abhängig, welches der in Frage kommenden Mobilteile RPP' diese Funktionalität anfordert oder welches der Mobilteile RPP' von dem ersten Festteil RFP1 angesteuert wird. Diese Mobilteile werden im folgenden als erste Mobilteile RPP1 bezeichnet. In dem ersten Funkraum FR1 des Telekommunikationssystems TKS gibt es z.B. vier erste Mobilteile RPP1, ein erstes 'erstes Mobilteil' RPP1₁ (erstes Erst-Mobilteil RPP1₁), ein zweites 'erstes Mobilteil' RPP1₂ (zweites Erst-Mobilteil RPP1₂) ein drittes 'erstes Mobilteil' RPP1₃ (drittes Erst-Mobilteil RPP1₃) und ein viertes 'erstes Mobilteil' RPP1₄ (viertes Erst-Mobilteil RPP1₄). Welche Form von Telekommunikationsverbindung diese ersten Mobilteile RPP1 durch die von dem ersten Festteil RFP1 abgetretenen bzw. abgegebenen Funktionalität aufbauen bzw. aufbauen können, in welchem Modus sie zu diesem Zweck betrieben werden und insbesondere zu welchen Mobilteilen bzw. zweiten Mobilteilen sie diese Telekommunikationsverbindungen aufbauen bzw. aufbauen können, wird im folgenden beschrieben.

Das erste Erst-Mobilteil RPP1₁ wird in einem Repeater-Modus betrieben, in dem es erstens als Repeater eine Externverbindung zwischen dem ersten Festteil RFP1 und einem in dem zweiten Funkraum FR2 befindlichen ersten 'zweiten Mobilteil' RPP2₁ (ersten Zweit-Mobilteil RPP2₁) steuert und zweitens Broadcast-Informationen an ein in dem zweiten Funkraum FR2 befindliches zweites 'zweites Mobilteil' RPP2₁ (zweites Zweit-Mobilteil RPP2₁) überträgt.

Das zweite Erst-Mobilteil RPP1₂ wird in dem Repeater-Modus betrieben, in dem es erstens eine Externverbindung mit dem ersten Festteil RFP1 unterhält und zweitens Broadcast-Informationen an zwei in dem zweiten Funkraum FR2 befindliche zweite Mobilteile RPP2 - einem dritten 'zweiten Mobilteil' RPP2₃ (dritten Zweit-Mobilteil RPP2₃) und einem vierten 'zweiten Mobilteil' RPP2₄ (vierten Zweit-Mobilteil RPP2₄) - überträgt.

Das dritte Erst-Mobilteil RPP1₃ wird in dem Repeater-Modus betrieben, in dem es erstens als Repeater eine Internverbindung zwischen einem in dem ersten Funkraum FR1 befindlichen fünften 'zweiten Mobilteil' RPP2₅ (fünften Zweit-Mobilteil RPP2₅) und einem in dem zweiten Funkraum FR2 befindlichen sechsten 'zweiten Mobilteil' RPP2₆ (sechsten Zweit-Mobilteil RPP2₆) steuert und zweitens Broadcast-Informationen an ein in dem zweiten Funkraum FR2 befindliches siebtes 'zweites Mobilteil' RPP2₇ (siebtes Zweit-Mobilteil RPP2₇) überträgt.

Das vierte Erst-Mobilteil RPP1₄ wird in einem Direktverbindungsmodus betrieben, in dem es erstens eine Internverbindung zu einem in dem ersten Funkraum FR1 befindlichen achten 'zweiten Mobilteil' RPP2₈ (achten Zweit-Mobilteil RPP2₈) herstellt und zweitens Broadcast-Informationen an drei in dem zweiten Funkraum FR2 befindliche zweite Mobilteile RPP2 - einem neunten 'zweiten Mobilteil' RPP2₉ (neunten Zweit-Mobilteil RPP2₉), einem zehnten 'zweiten Mobilteil' RPP2₁₀ (zehnten Zweit-Mobilteil RPP2₁₀) und einem elften 'zweiten Mobilteil' RPP2₁₁ (elften Zweit-Mobilteil RPP2₁₁) - überträgt.

Das Festteil RFP' und das erste Festteil RFP1 sind jeweils bidirektional an ein ISDN-Netz oder ein PSTN-Netz angeschlossen. Beim Anschluß an das ISDN-Netz können über die beiden ISDN-B-Kanäle zwei Externverbindungen über das Festteil abgewickelt werden. Für die beiden vorstehend beschriebenen Externverbindungen ist demzufolge entweder ein Anschluß an das ISDN-Netz oder ein Mehrkanal-PSTN-Anschluß (z.B. PSTN-Anschluß mit zwei a/b-Leitungen) erforderlich.

Das erste Festteil RFP1 und das erste Mobilteil RPP1 weisen ausgehend von dem bekannten Aufbau des Festteils bzw. der Basisstation und des Mobilteils gemäß FIGUR 2 im Unterschied zu diesen z.B. im Mikroprozessor µP der Zentralen Steuerung ZST spezielle, vorzugsweise als Programme ausgebildete, Steuerungsmittel STM auf, damit die vorstehend beschriebenen Szenarien beim Telkommunkationsverbindungsaufbau in dem Telekommunikationssystem TKS' ablaufen können bzw. realisierbar sind.

## Patentansprüche

1. Verfahren zum Aufbauen von Telekommunikationsverbindungen in Telekommunikationssystemen mit drahtloser Telekommunikation, insbesondere in DECT/GAP-Systemen, wobei in den Telekommunikationssystemen (TKS') Festteile (RFP') und Mobilteile (RPP') durch drahtlose Telekommunikation verbindbar sind,
**dadurch gekennzeichnet, daß**
erste Mobilteile (RPP1), die synchron zu ersten Festteilen (RFP1) sind, in bezug auf zweite Mobilteile (RPP2), die synchron und/oder asynchron zu den ersten Festteilen (RFP1) sind, für eine vorgegebene oder vorgebbare Zeitdauer
(a) in einem Direktverbindungsmodus den Aufbau von INTERN-Telekommunikationsverbindungen zu den zweiten Mobilteilen (RPP2) steuern und durchführen,
(b) in dem Direktverbindungsmodus und/oder einem Repeater-Modus Broadcast-Informationen an die zweiten Mobilteile (RPP2) übertragen und/oder
(c) in dem Repeater-Modus den Aufbau von INTERN-Telekommunikationsverbindungen zwischen den zweiten Mobilteilen (RPP2) und/oder EXTERN-Telekommunikationsverbindungen zwischen den ersten Festteilen (RFP1) und den zweiten Mobilteilen (RPP2) steuern und durchführen.

2. Verfahren nach Anspruch 1, **dadurch gekennzeichnet, daß**
die Synchronität zwischen den ersten Festteilen (RFP1) und den ersten Mobilteilen (RPP1) gegeben ist, wenn die ersten Mobilteile (RPP1) sich jeweils im Bereitschaftsmodus bzw. im "Idle Lock"-Modus befinden.

3. Verfahren nach Anspruch 1 oder 2, **dadurch gekennzeichnet, daß**
die Vorgehensweise der ersten Mobilteile (RPP1) gemäß der Merkmale (a)...(c) durch die ersten Mobilteile (RPP1) eingeleitet wird, indem an den ersten Mobilteilen (RPP1) durch Bedienprozeduren ausgelöst Anfragen bei den ersten Festteilen (RFP1) zum Abtreten bzw. Abgeben der für diese Vorgehensweise notwendigen Festteilfunktionalitäten an die ersten Festteile (RFP1) übertragen und diese Anfragen von den ersten Festteilen (RFP1) bejahend beantwortet werden.

4. Verfahren nach Anspruch 1 oder 2, **dadurch gekennzeichnet, daß**
die Vorgehensweise der ersten Mobilteile (RPP1) gemäß der Merkmale (a)...(c) durch die ersten Festteile (RFP1) eingeleitet wird.

5. Verfahren nach einem der Ansprüche 1 bis 4, **dadurch gekennzeichnet, daß**
die Telekommunikationsverbindungen nach dem DECT/GAP-Standard aufgebaut werden.

6. Mobilteil zum Aufbauen von Telekommunikationsverbindungen in Telekommunikationssystemen mit drahtloser Telekommunikation, insbesondere in DECT/GAP-Systemen, das in den Telekommunikationssystemen (TKS') mit ersten Festteilen (RFP1) und weiteren Mobilteilen (RPP2) durch drahtlose Telekommunikation verbindbar ist,
**gekennzeichnet durch**:
Steuerungsmittel (STM), die in bezug auf die weiteren Mobilteile (RPP2), die synchron und/oder asynchron zu den ersten Festteilen (RFP1) sind, für eine vorgebbare Zeitdauer
(a) in einem Direktverbindungsmodus den Aufbau von INTERN-Telekommunikationsverbindungen zu den weiteren Mobilteilen (RPP2) steuern und durchführen,
(b) in dem Direktverbindungsmodus und/oder einem Repeater-Modus Broadcast-Informationen an die weiteren Mobilteile (RPP2) übertragen und/oder
(c) in dem Repeater-Modus den Aufbau von INTERN-Telekommunikationsverbindungen zwischen den weiteren Mobilteilen (RPP2) und/oder EXTERN-Telekommunikationsverbindungen zwischen den ersten Festteilen (RFP1) und den weiteren Mobilteilen (RPP2) steuern und durchführen.

7. Mobilteil nach Anspruch 6, **dadurch gekennzeichnet, daß**
die Steuerungsmittel (STM) derart ausgebildet sind, daß die Synchronität zu den ersten Festteilen (RFP1) gegeben ist, wenn das Mobilteil (RPP1) sich im Bereitschaftsmodus bzw. im "Idle Lock"-Modus befindet.

8. Mobilteil nach Anspruch 6 oder 7, **dadurch gekennzeichnet, daß**
die Steuerungsmittel (STM) derart ausgebildet sind, daß die Vorgehensweise der Steuerungsmittel (STM) gemäß der Merkmale (a)...(c) durch das Mobilteil (RPP1) einleitbar ist, indem an dem Mobilteil (RPP1) durch Bedienprozeduren ausgelöst Anfragen bei den ersten Festteilen (RFP1) zum Abtreten bzw. Abgeben der für diese Vorgehensweise notwendigen Festteilfunktionalitäten an die ersten Festteile (RFP1) übertragen und diese Anfragen von den ersten Festteilen (RFP1) bejahend beantwortet werden.

9. Mobilteil nach Anspruch 6 oder 7, **dadurch gekennzeichnet, daß**
die Steuerungsmittel (STM) derart ausgebildet sind, daß die Vorgehensweise der Steuerungsmittel (STM) gemäß der Merkmale (a)...(c) durch die ersten Festteile (RFP1) einleitbar ist.

10. Mobilteil nach einem der Ansprüche 6 bis 9, **dadurch gekennzeichnet, daß**
die Telekommunikationsverbindungen nach dem DECT/GAP-Standard aufgebaut sind.

11. Telekommunikationssystem mit drahtloser Telekommunikation, insbesondere DECT/GAP-System, mit Festteilen (RFP') und Mobilteilen (RPP'), die durch drahtlose Telekommunikation verbindbar sind,
**gekennzeichnet durch**:
zu ersten Festteilen (RFP1) synchrone erste Mobilteile (RPP1), mit denen in bezug auf zweite Mobilteile (RPP2), die synchron und/oder asynchron zu den ersten Festteilen () sind, für eine vorgebbare Zeitdauer
(a) in einem Direktverbindungsmodus der Aufbau von INTERN-Telekoamunikationsvecbindunqen zu den zweiten Mobilteilen (RPP2) steuer- und durchführbar ist,
(b) in dem Direktverbindungsmodus und/oder einem Repeater-Modus Broadcast-Informationen an die zweiten Mobilteile (RPP2) übertragbar sind und/oder
(c) in dem Repeater-Modus der Aufbau von INTERN-Telekommunikationsverbindungen zwischen den zweiten Mobilteilen (RPP2) und/oder EXTERN-Telekommunikationsverbindungen zwischen den ersten Festteilen (RFP1) und den zweiten Mobilteilen (RPP2) steuer- und durchführbar ist.

12. Telekommunikationssystem nach Anspruch 11, **dadurch gekennzeichnet, daß**
die Synchronität zwischen den ersten Festteilen (RFP1) und den ersten Mobilteilen (RPP1) gegeben ist, wenn die ersten Mobilteile (RPP1) sich jeweils im Bereitschaftsmodus bzw. im "Idle Lock"-Modus befinden.

13. Telekommunikationssystem nach Anspruch 11 oder 12, **dadurch gekennzeichnet, daß**
die ersten Mobilteile (RPP1) und die ersten Festteile (RFP1) derart ausgebildet sind, daß die Vorgehensweise der ersten Mobilteile (RPP1) gemäß der Merkmale (a)...(c) durch die ersten Mobilteile (RPP1) einleitbar ist, indem an den ersten Mobilteilen (RPP1) durch Bedienprozeduren ausgelöst Anfragen bei den ersten Festteilen (RFP1) zum Abtreten bzw. Abgeben der für diese Vorgehensweise notwendigen Festteilfunktionalitäten an die ersten Festteile (RFP1) übertragen und diese Anfragen von den ersten Festteilen (RFP1) bejahend beantwortet werden.

14. Telekommunikationssystem nach Anspruch 11 oder 12, **dadurch gekennzeichnet, daß**
die ersten Mobilteile (RPP1) und die ersten Festteile (RFP1) derart ausgebildet sind, daß die Vorgehensweise der ersten Mobilteile (RPP1) gemäß der Merkmale (a) ..(c) durch die ersten Festteile (RFP1) einleitbar ist.

15. Telekommunikationssystem nach einem der Ansprüche 11 bis 14, **dadurch gekennzeichnet, daß**
die Telekommunikationsverbindungen nach dem DECT/GAP-Standard aufgebaut sind.

## Claims

1. Method for setting up telecommunication connections in telecommunication systems with wireless telecommunication, particularly in DECT/GAP systems, in which fixed parts (RFP') and portable parts (RPP') in the telecommunication systems (TKS') can be connected by wireless telecommunication, **characterized in that** first portable parts (RPP1), which are synchronous to first fixed parts (RFP1), for a predetermined or predeterminable period of time, with respect to second portable parts (RPP2) which are synchronous and/or asynchronous to the first fixed parts (RFP1),
(a) control and perform the setting up of INTERNAL telecommunication connections to the second portable parts (RPP2) in a direct connection mode,
(b) transmit broadcast information to the second portable parts (RPP2) in the direct connection mode and/or a repeater mode
(c) control and perform the setting up of INTERNAL telecommunication connections between the second portable parts (RPP2) and/or EXTERNAL telecommunication connections between the first fixed parts (RFP1) and the second portable parts (RPP2) in the repeated mode.

2. Method according to Claim 1, **characterized in that** the synchronism between the first fixed parts (RFP1) and the first portable parts (RPP1) is given when the first portable parts (RPP1) are in each case in stand-by mode or, respectively, in "idle lock" mode.

3. Method according to Claim 1 or 2, **characterized in that** the procedure of the first portable parts (RPP1) according to features (a)...(c) is initiated by the first portable parts (RPP1) **in that** enquiries at the first fixed parts (RFP1) for transferring or handing over the fixed part functions necessary for this procedure, triggered at the first portable parts (RPP1) by operating procedures, are transmitted to the first fixed parts (RFP1) and these enquiries are answered positively by the first fixed parts (RFP1).

4. Method according to Claim 1 or 2, **characterized in that** the procedure of the first portable parts (RPP1) according to features (a)...(c) is initiated by the first fixed parts (RFP1).

5. Method according to one of Claims 1 to 4, **characterized in that** the telecommunication connections are set up in accordance with the DECT/GAP standard.

6. Portable part for setting up telecommunication connections in telecommunication systems with wireless telecommunication, particularly in DECT/GAP systems, which can be connected to first fixed parts (RFP1) and further portable parts (RPP2) by wireless telecommunication in the telecommunication systems (TKS'),
**characterized by**
control means (STM) which, for a predeterminable period of time, with respect to the further portable parts (RPP2) which are synchronous and/or asynchronous to the first fixed parts (RFP1),
(a) control and perform the setting up of INTERNAL telecommunication connections to the further portable parts (RPP2) in a direct connection mode,
(b) transmit broadcast information to the further portable parts (RPP2) in the direct connection mode and/or a repeater mode, and/or
(c) control and perform the setting up of INTERNAL telecommunication connections between the further portable parts (RPP2) and/or EXTERNAL telecommunication connections between the first fixed parts (RFP1) and the further portable parts (RPP2) in the repeater mode.

7. Portable part according to Claim 6, **characterized in that** the control means (STM) are constructed in such a manner that the synchronism to the first fixed parts (RFP1) is given when the portable part (RPP1) is in stand-by mode or, respectively, in "idle lock" mode.

8. Portable part according to Claim 6 or 7, **characterized in that** the control means (STM) are constructed in such a manner that the procedure of the control means (STM) according to features (a)...(c) can be initiated by the portable part (RPP1) **in that** enquiries at the first fixed parts (RFP1) for transferring or handing over the fixed part functions necessary for this procedure, triggered at the portable part (RPP1) by operating procedures, are transmitted to the first fixed parts (RFP1) and these enquiries are answered positively by the first fixed parts (RFP1).

9. Portable part according to Claim 6 or 7, **characterized in that** the control means (STM) are constructed in such a manner that the procedure of the control means (STM) according to features (a)...(c) can be initiated by the first fixed parts (RFP1).

10. Portable part according to one of Claims 6 to 9, **characterized in that** the telecommunication connections are set up in accordance with the DECT/GAP standard.

11. Telecommunication system with wireless telecommunication, particularly a DECT/GAP system, with fixed parts (RFP') and portable parts (RPP') which can be connected by wireless telecommunication, **characterized by** first portable parts (RPP1) synchronous to first fixed parts (RFP1), by means of which, for a predeterminable period of time, with respect to second portable parts (RPP2) which are synchronous and/or asynchronous to the first fixed parts (RFP1),
(a) the setting up of INTERNAL telecommunication connections to the second portable parts (RPP2) can be controlled and performed in a direct connection mode,
(b) broadcast information can be transmitted to the second portable parts (RPP2) in the direct connection mode and/or a repeater mode, and/or
(c) the setting up of INTERNAL telecommunication connections between the second portable parts (RPP2) and/or EXTERNAL telecommunication connections between the first fixed parts (RFP1) and the second portable parts (RPP2) can be controlled and performed in the repeater mode.

12. Telecommunication system according to Claim 11, **characterized in that** the synchronism between the first fixed parts (RFP1) and the first portable parts (RPP1) is given when the first portable parts (RPP1) are in each case in stand-by mode or, respectively, in "idle lock" mode.

13. Telecommunication system according to Claim 11 or 12, **characterized in that** the first portable parts (RPP1) and the first fixed parts (RFP1) are constructed in such a manner that the procedure of the first portable parts (RPP1) according to features (a)...(c) can be initiated by the first portable parts (RPP1) **in that** enquiries at the first fixed parts (RFP1) for transferring or handing over the fixed part functions necessary for this procedure, triggered at the first portable parts (RPP1) by operating procedures, are transmitted to the first fixed parts (RFP1) and these enquiries are answered positively by the first fixed parts (RFP1).

14. Telecommunication system according to Claim 11 or 12, **characterized in that** the first portable parts (RPP1) and the first fixed parts (RFP1) are constructed in such a manner that the procedure of the first portable parts (RPP1) according to features (a) ... (c) can be initiated by the first fixed parts (RFP1).

15. Telecommunication system according to one of Claims 11 to 14, **characterized in that** the telecommunication connections are set up in accordance with the DECT/GAP standard.

## Revendications

1. Procédé destiné à l'établissement de liaisons de télécommunication dans des systèmes de télécommunication radio, en particulier des systèmes DECT/GAP, des parties fixes (RFP') et des parties mobiles (RPP') pouvant être reliées par télécommunication radio dans les systèmes de télécommunication (TKS') **caractérisé en ce que**,
par rapport à des secondes parties mobiles (RPP2) qui sont synchrones et/ou asynchrones aux premières parties fixes (RFP1), des premières parties mobiles (RPP1), qui sont synchrones à des premières parties fixes (RFP1), pour une durée prédéfinissable
(a) commandent et procèdent à l'établissement de liaisons de télécommunication INTERNE avec les secondes parties mobiles (RPP2), en mode de liaison directe,
(b) transmettent des informations broadcast aux secondes parties mobiles (RPP2), en mode de liaison directe ou en mode de répétition et/ou,
(c) commandent et procèdent à l'établissement de liaisons de télécommunication INTERNE, entre les secondes parties mobiles (RPP2) et/ou à des liaisons de télécommunication EXTERNE entre les premières parties fixes (RFP1) et les secondes parties mobiles (RPP2), en mode de répétition

2. Procédé selon la revendication 1,
**caractérisé en ce que** le synchronisme entre les premières parties fixes (RFP1) et les premières parties mobiles (RPP1) est donné lorsque les premières parties mobiles (RPP1) se trouvent respectivement en mode de disponibilité ou en mode « Idle Lock ».

3. Procédé selon l'une quelconque des revendications 1 ou 2,
**caractérisé en ce que** le mode de fonctionnement des premières parties mobiles (RPP1) est déclenché par les premières parties mobiles (RPP1), conformément aux caractéristiques (a) . . . (c), par le fait que sur les premières parties mobiles (RPP1) des demandes pour la cession ou la restitution des fonctionnalités des parties fixes nécessaires pour ce mode de fonctionnement, déclenchées par des procédures de commande, sont transmises aux premières parties fixes (RFP1) et **en ce que** ces demandes obtiennent une réponse affirmative de la part des premières parties fixes (RFP1).

4. Procédé selon l'une quelconque des revendications 1 ou 2,
**caractérisé en ce que** le mode de fonctionnement des premières parties mobiles (RPP1) est déclenché par les premières parties fixes (RFP1), conformément aux caractéristiques (a) . . . (c).

5. Procédé selon l'une quelconque des revendications 1 à 4,
**caractérisé en ce que** les liaisons de télécommunication sont établies selon le standard DECT/GAP.

6. Partie mobile pour l'établissement de liaisons de télécommunication dans des systèmes de télécommunication radio, en particulier dans des systèmes DECT/GAP, qui dans les systèmes de télécommunication (TKS') peut être reliée à des premières parties fixes (RFP1) et aux secondes parties mobiles (RPP2), par télécommunication radio,
**caractérisée en ce que** par rapport aux autres parties mobiles (RPP2), qui sont synchrones et/ou asynchrones aux premières parties fixes (RFP1) des moyens de commande (STM), pour une durée prédéfinissable
(a) commandent et procèdent à l'établissement de liaisons de télécommunication INTERNE avec les secondes parties mobiles (RPP2), selon un mode de liaison directe,
(b) transmettent des informations broadcast aux secondes parties mobiles (RPP2), en mode de liaison directe ou en mode de répétition et/ou,
(c) commandent et procèdent à l'établissement de liaisons de télécommunication INTERNE, entre les secondes parties mobiles (RPP2) et/ou à des liaisons de télécommunication EXTERNE entre les premières parties fixes (RFP1) et les secondes parties mobiles (RPP2), en mode de répétition.

7. Partie mobile selon la revendication 6,
**caractérisée en ce que** les moyens de commande (STM) sont conçus de manière à assurer le synchronisme par rapport aux premières parties fixes (RFP1), lorsque la partie mobile (RPP1) est en mode de disponibilité ou en mode « Idie Lock ».

8. Partie mobile selon l'une quelconque des revendications 6 ou 7,
**caractérisée en ce que** les moyens de commande (STM) sont conçus de manière à ce que la partie mobile (RPP1) puisse déclencher le mode de fonctionnement des moyens de commande (STM) conformément aux caractéristiques (a) . . . (c), par le fait que sur la partie mobile (RPP1) des demandes pour la cession ou la restitution des fonctionnalités des pièces fixes nécessaires pour ce mode de fonctionnement, déclenchées par des procédures de commande, sont transmises aux premières parties fixes (RFP1) et **en ce que** ces demandes obtiennent une réponse affirmative de la part des premières parties fixes (RFP1).

9. Partie mobile selon l'une quelconque des revendications 6 ou 7,
**caractérisée en ce que** les moyens de commande (STM) sont conçus de manière à ce que les premières parties fixes (RFP1) puissent déclencher le mode de fonctionnement des moyens de commande (STM) conformément aux caractéristiques (a) . . . (c).

10. Partie mobile selon l'une quelconque des revendications 6 à 9,
**caractérisée en ce que** les liaisons de télécommunication sont établies selon le standard DECT/GAP.

11. Système de télécommunication radio, en particulier système DECT/GAP, avec des parties fixes (RFP') et des parties mobiles (RPP'), pouvant être reliées par télécommunication radio,
**caractérisé en ce que** par rapport à des premières parties fixes (RFP1), des premières parties mobiles (RPP1) synchrones , à l'aide desquelles par rapport à des secondes parties mobiles (RPP2 qui sont synchrones et/ou asynchrones par rapport aux premières parties fixes (),pour une période qui peut être prédéfinie.
(a) l'établissement de liaisons de télécommunication INTERNE vers les secondes parties mobiles (RPP2) peut être commandé et réalisé en mode de liaison direct,
(b) des informations broadcast peuvent être transmises aux secondes parties mobiles (RPP2), en mode de liaison direct et/ou en mode de répétition et/ou
(c) l'établissement de liaisons de télécommunication INTERNE entre les secondes parties mobiles (RPP2) et/ou de liaisons de télécommunication EXTERNE entre les premières parties fixes (RFP1) et les secondes parties mobiles (RPP2) peut être commandé et réalisé en mode de répétition.

12. Système de télécommunication selon la revendication 11,
**caractérisé en ce que** le synchronisme entre les premières parties fixes (RFP1) et les premières parties mobiles (RPP1) est donné, lorsque les premières parties mobiles (RPP1) se trouvent respectivement en mode de disponibilité ou en mode « Idie Lock ».

13. Système de télécommunication selon l'une quelconque des revendications 11 ou 12,
**caractérisé en ce que** les premières parties mobiles (RPP1) et les premières parties fixes (RFP1) sont conçues de manière à ce que le mode de fonctionnement des premières parties mobiles (RPP1) conformément aux caractéristiques (a) . . . (c) puisse être déclenché par les premières parties mobiles (RPP1, par le fait que sur les premières parties mobiles (RPP1), des demandes pour la cession ou la restitution des fonctionnalités des pièces fixes nécessaires pour ce mode de fonctionnement, déclenchées par des procédures de commande, sont transmises aux premières parties fixes (RFP1) et **en ce que** ces demandes obtiennent une réponse affirmative de la part des premières parties fixes (RFP1).

14. Système de télécommunication selon l'une quelconque des revendications 11 ou 12,
**caractérisé en ce que** les premières parties mobiles (RPP1) et les premières parties fixes (RFP1) sont conçues de manière à ce que le mode de fonctionnement des premières parties mobiles (RPP1) conformément aux caractéristiques (a) ... (c) puisse être déclenché par les premières parties fixes (RFP1).

15. Système de télécommunication selon l'une quelconque des revendications 11 à 14,
**caractérisé en ce que** les liaisons de télécommunication sont établies selon le standard DECT/GAP.
